(19) Europäisches Patentamt

European Patent Office

Office européen des brevets

(11) Veröffentlichungsnummer: **0 304 502**
**A1**

(12) **EUROPÄISCHE PATENTANMELDUNG**

(21) Anmeldenummer: 87112368.3

(22) Anmeldetag: 26.08.87

(51) Int. Cl.⁴: **C02F 1/72 , C02F 3/00**

(43) Veröffentlichungstag der Anmeldung:
**01.03.89 Patentblatt 89/09**

(84) Benannte Vertragsstaaten:
**AT BE CH DE ES FR GB GR IT LI LU NL SE**

(71) Anmelder: **Schüssler, Karl Heinz**
**Philipp-Reis-Strasse 18**
**D-6460 Gelnhausen(DE)**

(72) Erfinder: **Schüssler, Karl Heinz**
**Philipp-Reis-Strasse 18**
**D-6460 Gelnhausen(DE)**

(74) Vertreter: **Keil, Rainer A., Dipl.-Phys. Dr. et al**
**KEIL & SCHAAFHAUSEN Patentanwälte**
**Eysseneckstrasse 31**
**D-6000 Frankfurt am Main 1(DE)**

(54) **Verfahren zur Anreicherung von Flüssigkeiten, Flüssigkeitsgemischen u. dgl. mit Sauerstoff.**

㊗ Die Erfindung betrifft ein Verfahren zur Anreicherung von Flüssigkeiten, Flüssigkeitsgemischen u.dgl. Medien, insbesondere von Abwässern und Abwasser-Schlamm-Gemischen, mit Sauerstoff, wobei man den Sauerstoff mit einem Sauerstoffträger gebunden in Form von Pulver, Granulat, Tabletten, Platten o.dgl. Festkörpern, welche in dem Medium oder einer sonstigen Flüssigkeit unter Freigabe des Sauerstoffs löslich sind, dem Medium am Entstehungsort, in der Kanalisation, im Klärbecken und/oder in einem natürlichen Gewässer zugibt.

EP 0 304 502 A1

## Verfahren zur Anreicherung von Flüssigkeiten, Flüssigkeitsgemischen u.dgl. mit Sauerstoff.

Die Erfindung bezieht sich auf ein Verfahren zur Anreicherung von Flüssigkeiten, Flüssigkeitsgemischen u.dgl. Medien, insbesondere von Abwässern und Abwasser-Schlamm-Gemischen, mit Sauerstoff.

Für die Aufbereitung von Abwässern sind Belüftungsverfahren bekannt, bei welchen Sauerstoff mittels Druckluft in die mit Sauerstoff anzureichernde Flüssigkeit eingeblasen wird. Hierzu sind aufwendige Druckluftaggregate, Rohrleitungsysteme und Luftverteiler, wie z.B. Keramikkerzen, Keramikdome und flexible Membranbelüfter erforderlich. Derartige Konstruktionen sind sehr aufwendig und kostenintensiv. Das gleiche gilt für Verfahren, bei welchen der Sauerstoff in flüssiger Form in die mit Sauerstoff anzureichernde Flüssigkeit eingebracht wird. Auch hierzu sind Flüssigsauerstoff-Erzeuger, Rohrleitungssysteme und Flüssigsauerstoffverteiler erforder lich. Schon die Flüssigsauerstoff-Erzeugungsanlagen machen derartige Verfahren unerwünscht kostspielig. Ein weiterer Nachteil der bekannten Verfahren besteht darin, daß Druckluftaggregate, Flüssigsauerstoff-Erzeugungsanlagen, Rohrleitungen und Luft/Sauerstoff-Verteiler sehr wartungsintensiv sind. Die Luft/Sauerstoff-Verteiler verstopfen beispielsweise in kurzer Zeit. Nachteilig ist bei den bekannten Verfahren ferner, daß der Sauerstoff nur in geringen Grenzen in die Flüssigkeit eingebracht werden kann.

Hiervon ausgehend liegt der Erfindung die Aufgabe zugrunde, ein Verfahren der eingangs genannten Art so weiterzubilden, daß auf einfachere, kostengünstigere und wirkungsvollere Weise Sauerstoff in Flüssigkeiten, Flüssigkeitsgemische u.dgl. Medien, insbesondere Abwässer und Abwasser-Schlamm-Gemische eingebracht werden kann.

Diese Aufgabe wird erfindungsgemäß im wesentlichen dadurch gelöst, daß man den Sauerstoff mit einem Sauerstoffträger gebunden in Form von Pulver, Granulat, Tabletten, Platten o. dgl. Festkörpern, welche in dem Medium oder einer sonstigen Flüssigkeit unter Freigabe des Sauerstoffs löslich sind, dem Medium am Entstehungsort, in der Kanalisation, in einem Klärbecken und/oder in einem natürlichen Gewässer zugibt. Hierbei ist man weitgehend unabhängig von einem Rohrleitungssystem, da das Pulver, Granulat, Tabletten, Platten o.dgl. Festkörper auf beliebige Weise in das mit Sauerstoff anzureichernde Medium eingebracht werden kann. So ist es beispielsweise möglich, den in dem Sauerstoffträger in Form von Pulver, Granulat, Tabletten, Platten o.dgl. Festkörpern gebundenen Sauerstoff bereits dem Spülkasten bzw. der Spülanlage einer Toilette, der Kanalisation von Haushalten oder Gewerbebetrieben zu den Klärbecken, dem Klärbecken selbst oder natürlichen Gewässern, wie Flüssen, Teichen und Seen, zuzugeben. Hierdurch ist eine sehr einfache, kostensparende und vielfältig anwendbare Möglichkeit der Sauerstoffanreicherung vorgeschlagen, welche Luftdruckaggregate, Flüssigsauerstoff-Erzeugungsanlagen, Rohrleitungsanlagen, Luft/Sauerstoff-Verteiler u.dgl. Anlagenteile überflüssig macht. Die Festkörper können außerdem gleichmäßig in dem Medium verteilt werden, so daß auch eine gleichmäßige Sauerstoffbeaufschlagung erfolgt. Als Sauerstoffträger kann z.B. das unter dem Handelsnamen Caroat (Degussa) erhältliche Kaliummonopersulfat plus Füllstoffe dienen.

Vorzugsweise ist das spezifische Gewicht des Materials der Festkörper größer als das des mit Sauerstoff anzureichernden Mediums. Im Falle der Anreicherung von Abwässern mit Sauerstoff ist das spezifische Gewicht des Materials des Festkörpers dann also größer als 1. Werden die Festkörper nun beispielsweise in das Belebungsbecken einer Kläranlage, einen See oder einen Teich eingestreut, so sinken diese unter allmählicher Auflösung zu Boden. Dabei wird der an den Sauerstoffträger gebundene Sauerstoff frei und reichert die Füssigkeit auch in den unteren Regionen mit Sauerstoff an.

Bei einer noch weiteren Ausgestaltung der Erfindung enthält das Material der Festkörper z.B. Natirumcarbonat oder Natriumperborat mit Zitronensäure bzw. Calciumperoxomonosulfat o.dgl. in dem Medium einen Sprudeleffekt erzeugenden Stoff. Beim Zuführen der Festkörper in das Medium und Auflösen derselben in dem Medium werden gasförmige Bläschen frei und wälzen die Flüssigkeit um, wodurch die Flüssigkeit und der gleichzeitig frei werdende Sauerstoff gut vermischt werden.

Bei Anwendung von Festkörpern, deren Material auch einen einen Sprudeleffekt erzeugenden Stoff enthalten, führen die entstehenden kleinen Gasbläschen abgesehen von der Durchmischung des Mediums auch zu einer Flotation von in dem Medium enthal tenen schwebenden Partikeln, die dann auf einfache Art und Weise aus der Flüssigkeit separiert und dann auf herkömmlichem Wege entfernt werden können.

Eine Steuerung der Sauerstoffanreicherung kann man vorzugsweise dadurch erreichen, daß die Zugabe der Festkörper über eine Dosiereinrichtung erfolgt.

Eine gleichmäßige Verteilung des Sauerstoffs in der Flüssigkeit erreicht man insbesondere auch dadurch, daß man die Festkörper dem Medium zuführt, während dieses sich aufgrund künstlich erzeugter oder natürlicher Umwälzung oder Strömung, insbesondere Umlaufströmung, bewegt. In der Spülanlage von Toiletten, im Toilettenbecken selbst, der Kanalisation oder in Bächen und Flüssen bewegt sich das mit Sauerstoff anzureichernde Abwasser ohnehin. Die intensive Strömung durch die Spülanlage bzw. der Kanalisation wird dann zur intensiven Vermischung des Abwassers bzw. Abwassergemisches mit dem Sauerstoff ausgenutzt. Die Zugabe der den Sauerstoff in gebundener Form enthaltenden und beim Auflösen freigebenden Festkörper schon in der Spülanlage bzw. der Kanalisation sorgt dafür, daß der Sauerstoffanreicherungsprozeß bereits beim Transport des Abwassers bzw. Abwassergemisches vom Entstehungsort zu der Kläranlage teilweise oder weitgehend erfolgt. Die Kläranlage kann dadurch erheblich kleiner dimensioniert werden, was die Ausführung des erfindungsgemäßen Verfahrens noch wirtschaftlicher macht. Mit der Erfindung ist es also möglich, daß der Sauerstoffanreicherungsprozeß der Abwässer und Abwassergemische bereits in den Haushalten und/oder Gewerbebetrieben beginnt und dementsprechend die Durchführung der Abwasseraufbereitung teilweise auf die Abwassererzeuger selbst verlagert wird.

Statt dessen oder zusätzlich können die Festkörper aber auch dem Medium beispielsweise beim Einströmen in ein Klärbecken zugeführt werden, wodurch die Strömung des zufließenden Abwassers bzw. Abwassergemisches für die Vermischung des entstehenden Sauerstoffes mit dem Medium ausgenutzt wird.

Ein weiteres Erfindungsmerkmal besteht darin, daß das Material der Festkörper einen Auflösungsverzögerer enthält. Hierdurch kann die Geschwindigkeit der Sauerstoffabgabe je nach Einsatzort des erfindungsgemäßen Verfahren bestimmt werden.

Die Festkörper können dem mit Sauerstoff anzureichernden Medium auch dadurch mittelbar zugeführt werden, daß die Festkörper zunächst in einem geringen Flüssigkeitsvolumen teilweise oder ganz gelöst und dann die mit Sauerstoff hoher Konzentration ausgestattete Lösung dem mit Sauerstoff anzureichernden Medium zugeführt wird. Auch diese Verfahrensabwandlung hat den Vorteil, daß die erheblichen Anlagenaufwendungen für Drucklufterzeugung und -zuführung und/oder Flüssigsauerstoffherstellung und -zuführung vermieden sind.

Die vorher aufgelösten oder nicht aufgelösten Festkörper können dem mit Sauerstoff anzureichernden Medium auch periodisch zugegeben werden. Auf diese Weise können entsprechende Beckenzonen oder ganze Belebungsbecken als Denitrifikationszonen betrieben werden und somit eine leichte Betriebsweise Nitrifikation/Denitrifikation z.B. des Abwassers ermöglichen. Das gleiche gilt für eine partielle Zugabe der Festkörper in das oder die Belebungsbecken.

In weiterer Ausgestaltung des Erfindungsgedankens wird vorgeschlagen, daß man das Abwasser-Schlamm-Gemisch noch während des Auflösevorganges der einen einen Sprudeleffekt erzeugenden Stoff enthaltenden Festkörper entwässert. Der Sprudeleffekt schafft hierbei nämlich Hohlräume und somit Entwässerungskanäle in dem Wasser-Schlamm-Gemisch, was eine bessere Entwässerung in Eindickern, in Schlammpressen, wie Siebbandpressen, Kammerfilterpressen oder Dekantern bewirkt.

Das erfindungsgemäße Verfahren hat ein weites Anwendungsgebiet; so ist es auch noch in Wasser-Schlamm-Gemischen anwendbar, welche einen Feststoffgehalt bis zu 99,9% haben.

Für die bereits angesprochene künstliche Bewegung der mit Sauerstoff anzureichernden Flüssigkeiten oder Flüssigkeitsgemischen in Klärbecken eignen sich beispielsweise Flüssigkeitsumwälzpropeller, Turbinen, Injektoren, Pumpen, Bürsten, Kreisel, Stauscheiben oder auch eine separate Druckluftumwälzung. Die horizontale und/oder vertikale Umwälzung des Mediums erfolgt dabei vorzugsweise in Rundbecken, Kreisringbecken, Karusellbecken oder Oxydationsgräben, wobei die Festkörper dann an einer oder mehreren Stellen verteilt in das Medium eingebracht werden.

Die Verteilung der Tabletten in einem Belebungsbecken kann beispielsweise über eine oberhalb des Beckens bewegliche Brücke oder über eine entsprechende Verteilervorrichtung geschehen, oder die vorher in etwas Flüssigkeit angesetzten Festkörper können über eine bewegliche Rohrleitung oder eine feste Rohrleitung mit entsprechenden Auslaßstutzen in den mit Sauerstoff anzureichernden Beckeninhalt abgegeben werden.

Ein weiterer wesentlicher Vorteil des erfindungsgemäßen Verfahrens besteht darin, daß eine wesentlich geringere Abluftmenge als bei herkömmlichen Verfahren anfällt und dadurch das Problem der Abluftbehandlung entsprechend verringert ist.

## Ansprüche

1. Verfahren zur Anreicherung von Flüssigkeiten, Flüssigkeitsgemischen u.dgl. Medien, insbesondere von Abwässern und Abwasser-Schlamm-Gemischen, mit Sauerstoff, dadurch gekennzeichnet, daß man den Sauerstoff mit einem Sauerstoffträger gebunden in Form von Pulver, Granulat, Tabletten, Platten o.dgl. Festkörpern, welche in dem Medium oder einer sonstigen Flüssigkeit unter Freigabe des Sauerstoffs löslich sind, dem Medium am Entstehungsort, in der Kanalisation, im Klärbekken und/oder in einem natürlichen Gewässer zugibt.

2. Verfahren nach Anspruch 1, dadurch gekennzeichnet, daß das spezifische Gewicht des Materials der Festkörper größer ist als das des mit Sauerstoff anzureichernden Mediums, also bei Wasser größer als 1.

3. Verfahren nach Anspruch 1 oder 2, dadurch gekennzeichnet, daß das Material der Festkörper Natriumcarbonat oder Natriumperborat mit Zitronensäure bzw. Calciumperoxomonosulfat o.dgl. in dem Medium einen Sprudeleffekt erzeugenden Stoff enthält.

4. Verfahren nach einem der Ansprüche 1 bis 3, dadurch gekennzeichnet, daß das Material der Festkörper einen Auflösungsverzögerer enthält.

5. Verfahren nach einem der Ansprüche 1 bis 4, dadurch gekennzeichnet, daß man die Festkörper dem Medium mittels einer Dosiereinrichtung zugibt.

6. Verfahren nach einem der Ansprüche 1 bis 5, dadurch gekennzeichnet, daß man die Festkörper dem Medium zuführt, während dieses sich aufgrund künstlich erzeugter oder natürlicher Umwälzung oder Strömung, insbesondere Umlaufströmung, bewegt.

7. Verfahren nach einem der Ansprüche 1 bis 6, dadurch gekennzeichnet, daß man die Festkörper dem Medium beim Einströmen in ein Klärbecken zuführt.

8. Verfahren nach einem der Ansprüche 1 bis 7, dadurch gekennzeichnet, daß man die Festkörper zunächst in einem geringen Flüssigkeitsvolumen löst und dann die Lösung dem mit Sauerstoff anzureichernden Medium zuführt.

9. Verfahren nach einem der Ansprüche 3 bis 9, dadurch gekennzeichnet, daß man das Abwasser-Schlamm-Gemisch während des Auflösungsvorganges der einen einen Sprudeleffekt erzeugenden Stoff enthaltenden Festkörper entwässert.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CHEMICAL ABSTRACTS, Band 100, Nr. 6, 6. Februar 1984, Seite 279, Zusammenfassung Nr. 39099x, Columbus, Ohio, US; & US-102 905 (W.H. KIBBEL) 05-04-1983 * Zusammenfassung * --- | 1,4 | C 02 F 1/72 C 02 F 3/00 |
| X | CHEMICAL ABSTRACTS, Band 106, Nr. 10, 9. März 1987, Seite 344, Zusammenfassung Nr. 72394m, Columbus, Ohio, US; & JP-A-61 212 382 (ENZYME K.K.) 20-09-1986 * Zusammenfassung * --- | 1 | |
| X | DE-A-3 213 128 (R.L. VON REPPERT) * Seite 1, Ansprüche 1,3; Seite 5, Zeilen 1-8 * --- | 1,2,6 | |
| X | EP-A-0 136 973 (B. STRAUSAK) * Seite 1, Absatz 1; Ansprüche 1-8,10,12; Seite 3, Absatz 6 * --- | 1,4 | |
| X | DE-A-2 808 519 (K. HOFFMANN) * Seite 1, Ansprüche 1-4; Seite 2 * --- | 1,2 | RECHERCHIERTE SACHGEBIETE (Int. Cl.4) |
| A | US-A-4 080 351 (CHEMED CORP.) * Spalte 1, Zeile 60 - Spalte 2, Zeile 4 * ----- | 3 | C 02 F |

Der vorliegende Recherchenbericht wurde für alle Patentansprüche erstellt

| Recherchenort | Abschlußdatum der Recherche | Prüfer |
|---|---|---|
| DEN HAAG | 22-04-1988 | TEPLY J. |